# FASCICULE DE BREVET EUROPEEN

(11) **EP 3 044 474 B1**
(45) Date de publication et mention de la délivrance du brevet: **25.10.2017**
(21) Numéro de dépôt: 14796165.0
(22) Date de dépôt: 09.09.2014
(51) Int. Cl.: F16F 15/14

(54) **DISPOSITIF D'AMORTISSEMENT PENDULAIRE**
PENDELARTIGE DÄMPFUNGSVORRICHTUNG
PENDULAR DAMPING DEVICE

(30) Priorité: 10.09.2013 FR 1358696
(43) Date de publication de la demande: 20.07.2016
(73) Titulaire: Valeo Embrayages, 80009 Amiens Cedex 2 (FR)
(72) Inventeur: CAILLERET, Franck, F-80009 Amiens Cedex 1 (FR)
(74) Mandataire: Cardon, Nicolas
(86) Numéro de dépôt international: PCT/FR2014/052231
(87) Numéro de publication internationale: WO 2015/036688

(56) Documents cités:
- DE-A1-102009 042 836
- DE-A1-102011 088 925
- FR-A1- 2 986 296

## Description

La présente invention concerne un dispositif d'amortissement pendulaire, notamment pour véhicule automobile.

Un tel dispositif, également appelé oscillateur pendulaire ou pendule, est notamment destiné à équiper une transmission d'un véhicule automobile.

Dans une transmission de véhicule automobile, on associe généralement au moins un système d'amortissement de torsion à un embrayage apte à relier sélectivement le moteur à la boîte de vitesses.

Un moteur à explosion présente des acyclismes du fait des explosions se succédant dans les cylindres du moteur, ces acyclismes variant notamment en fonction du nombre de cylindres.

Le système d'amortissement comporte classiquement des ressorts et des éléments de friction ayant pour fonction de filtrer les vibrations dues aux acyclismes de rotation du moteur et intervient avant la transmission du couple moteur à la boîte de vitesses. Cela permet d'éviter que de telles vibrations pénètrent dans la boîte de vitesses et y provoquent des chocs, bruits et nuisances sonores indésirables.

Afin d'améliorer encore la filtration, il est connu d'utiliser un dispositif d'amortissement pendulaire, en plus du dispositif d'amortissement usuel.

Un tel dispositif d'amortissement pendulaire comporte classiquement un support annulaire destiné à être entraîné en rotation autour de son axe et des masses pendulaires montées en périphérie externe du support. Chaque masse est animée d'un mouvement pendulaire en fonctionnement et comporte deux parties, montées axialement de part et d'autre du support et reliées par des rouleaux traversant chacun une ouverture en arc de cercle du support, les extrémités desdits rouleaux étant engagées dans des ouvertures en arc de cercle des parties correspondantes de la masse pendulaire.

En réaction aux irrégularités ou acyclismes de rotation, chaque masse se déplace de manière à ce que son centre de gravité oscille de façon pendulaire. La fréquence d'oscillation de chaque masse est proportionnelle à la vitesse de rotation de l'arbre moteur, le multiple correspondant pouvant par exemple prendre une valeur proche du rang de l'harmonique prépondérant des vibrations responsables des fortes irrégularités de rotation au voisinage du ralenti.

Afin d'améliorer le fonctionnement et l'efficacité d'un tel dispositif d'amortissement pendulaire, il est connu d'équiper le dispositif de moyens de synchronisation des masses pendulaires.

Le document FR 2 781 029 propose de relier les masses pendulaires par des maillons au niveau de leurs extrémités circonférentielles. Chaque maillon est articulé sur les extrémités circonférentielles de deux masses adjacentes, par l'intermédiaire de deux rivets, de façon à ce que les masses soient déplacées de façon synchrone les unes par rapport aux autres.

Le nombre important de liaisons articulées entre les maillons et les masses pendulaires génère du frottement, et donc une hystérésis et un retard de fonctionnement. Le déplacement des masses pendulaires se fait ainsi avec un certain retard par rapport aux explosions du moteur, ce retard pouvant aller jusqu'à générer une opposition de phase par rapport aux vibrations engendrées par les explosions. L'efficacité des moyens d'amortissement pendulaires est ainsi limitée, les vibrations pouvant même être amplifiées dans le cas d'une opposition de phase.

Le document WO 2011/110153 propose des moyens de synchronisation des masses pendulaires comportant des entretoises en arc de cercle montées de façon mobile dans des ouvertures en arc de cercle ménagées dans le support des masses pendulaires. Les extrémités circonférentielles des masses comportent des plots s'étendant axialement à l'intérieur des ouvertures en arc de cercle et destinées à venir en appui de part et d'autre des entretoises. Les entretoises et les ouvertures correspondantes présentent des dimensions relativement importantes.

En fonctionnement, lors du déplacement des masses pendulaires par rapport au support, les plots poussent ou sont poussés par les entretoises, ces dernières se déplaçant également à l'intérieur des ouvertures en arc de cercle.

Dans cette solution, le glissement des entretoises et des plots à l'intérieur des ouvertures en arc de cercle génère des frottements importants et donc des retards de déplacement des masses par rapport aux vibrations générées par les explosions du moteur à combustion interne.

En outre, les ouvertures ménagées dans le support fragilisent ce dernier.

Le document DE 10 2011 102 812 propose des moyens de synchronisation des masses pendulaires comportant un organe de synchronisation pivotant par rapport au support, les extrémités des masses pendulaires comportant des plots axiaux montés de façon mobile dans des ouvertures en arc de cercle ménagées dans le support. Les plots de deux masses adjacentes sont destinés à prendre appui de part et d'autre de l'organe de l'organe de synchronisation pivotant. En fonctionnement, lors du déplacement des masses pendulaires par rapport au support, les plots poussent ou sont poussés par les organes de synchronisation pivotants.

Les ouvertures ménagées dans le support présentent des dimensions relativement importantes, ce qui a pour effet de fragiliser le support. Le document DE 10 2011 088 925 A1 décrit une autre solution de synchronisation des masses pendulaires. L'invention a notamment pour but d'apporter une solution simple, efficace et économique à ces problèmes.

A cet effet, elle propose un dispositif d'amortissement pendulaire comportant au moins deux masses pendulaires adjacentes montées de façon mobile sur un support destiné à être entraîné en rotation autour d'un axe, un organe de synchronisation étant monté entre les deux masses pendulaires adjacentes, caractérisé en ce qu'il comporte au moins un plot fixe par rapport au support, engagé dans un trou oblong rectiligne de l'organe de synchronisation, les masses pendulaires étant aptes à venir en appui de part et d'autre de l'organe de synchronisation en fonctionnement.

Le dispositif d'amortissement selon l'invention propose ainsi des moyens de synchronisation de structure simple, ne nécessitant pas de larges ouvertures dans le support, de façon à ne pas le fragiliser. Les frottements en jeu sont également limités, ce qui permet d'améliorer l'efficacité du dispositif d'amortissement pendulaire.

Selon une forme de réalisation de l'invention, le dispositif d'amortissement pendulaire comporte au moins deux plots fixes par rapport au support, engagés dans le trou oblong de l'organe de synchronisation de façon à ce que ledit organe de synchronisation soit animé d'un mouvement de translation par rapport au support en fonctionnement.

Selon une autre forme de réalisation de l'invention, le dispositif d'amortissement pendulaire comporte au moins trois plots fixes par rapport au support, un plot étant engagé dans le trou oblong de l'organe de synchronisation, deux autres plots étant aptes à coulisser le long d'au moins une surface plane dudit organe de synchronisation, de façon à ce que ledit organe de synchronisation soit animé d'un mouvement de translation par rapport au support en fonctionnement.

Selon encore une autre forme de réalisation de l'invention, le dispositif d'amortissement pendulaire comporte un seul plot fixe par rapport au support et engagé dans le trou oblong de chaque organe de synchronisation, les extrémités des masses pendulaires en appui sur l'organe de synchronisation comportant des surfaces aptes à pivoter par rapport aux zones d'appui desdites extrémités des masses sur l'organe de synchronisation.

Avantageusement, l'organe de synchronisation a une forme oblongue s'étendant suivant un axe, le trou oblong s'étendant suivant l'axe de l'organe de synchronisation, les extrémités de l'organe de synchronisation comportant des surfaces d'extrémité arrondies destinées à l'appui des extrémités correspondantes des masses pendulaires.

Dans ce cas, les extrémités des masses pendulaires peuvent comporter des zones en creux, de forme arrondie, en appui sur les surfaces d'extrémité arrondies de l'organe de synchronisation.

En outre, l'organe de synchronisation peut comporter des moyens d'écartement intercalés axialement entre le support et l'une au moins des masses pendulaires adjacentes.

Cette caractéristique permet de limiter les frottements entre la masse correspondante et le support, de manière à augmenter encore l'efficacité du dispositif d'amortissement pendulaire.

Les moyens d'écartement peuvent par exemple comporter au moins une languette s'étendant entre la masse pendulaire correspondante et le support.

Préférentiellement, chaque plot engagé dans le trou oblong de l'organe de synchronisation est formé par une goupille ou par une bague engagée fixement dans un trou du support.

Enfin, chaque plot engagé dans le trou oblong de l'organe de synchronisation peut être cylindrique et peut avoir un diamètre sensiblement égal à la largeur dudit trou oblong.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'un dispositif d'amortissement selon une première forme de réalisation de l'invention,
- la figure 2 est une vue de détail d'une partie de la figure 1, illustrant le montage d'un organe de synchronisation entre deux masses pendulaires,
- la figure 3 est une vue correspondant à la figure 2, dans laquelle les masses pendulaires ont été retirées,
- la figure 4 est une vue en perspective d'un organe de synchronisation,
- les figures 5 à 8 sont des vues de face et de détail, illustrant quatre positions différentes de l'organe de synchronisation et des masses pendulaires,
- la figure 9 est une vue en perspective d'un dispositif d'amortissement selon une deuxième forme de réalisation de l'invention,
- les figures 10 et 11 sont des vues de détail d'une partie de la figure 9, illustrant deux positions différentes d'un organe de synchronisation et des masses pendulaires correspondantes,
- la figure 12 est une vue en perspective d'un dispositif d'amortissement selon une troisième forme de réalisation de l'invention,
- les figures 13 et 14 sont des vues de détail d'une partie de la figure 12, illustrant deux positions différentes d'un organe de synchronisation et des masses pendulaires correspondantes.

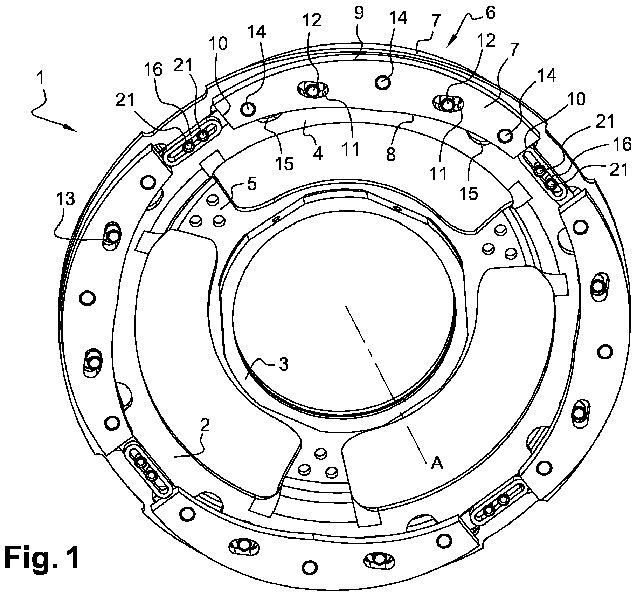

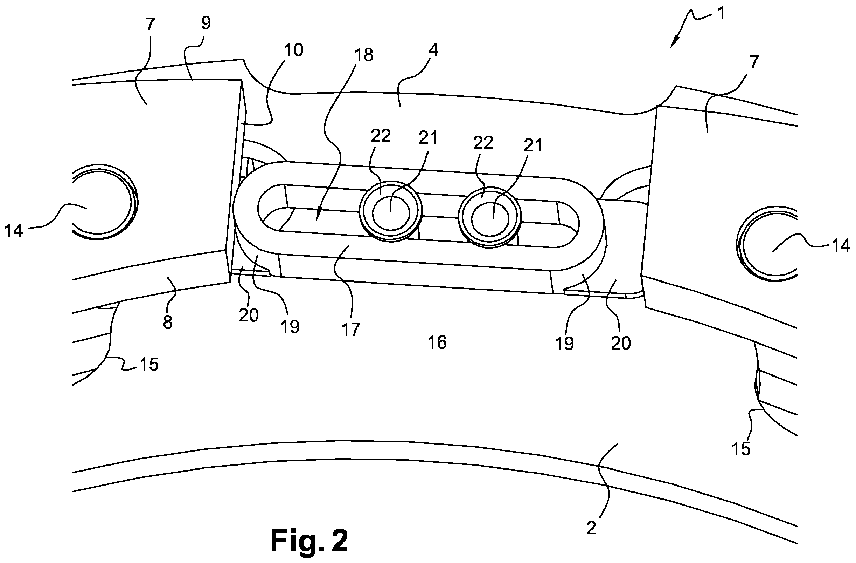

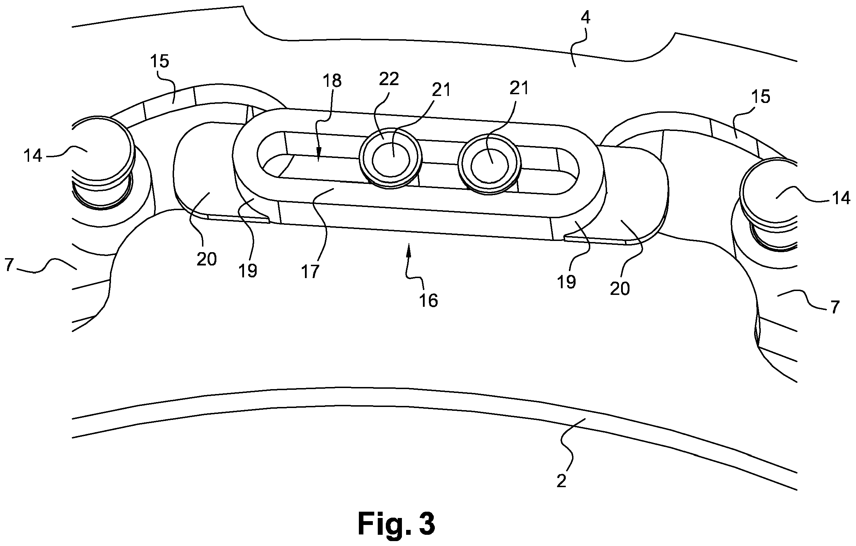

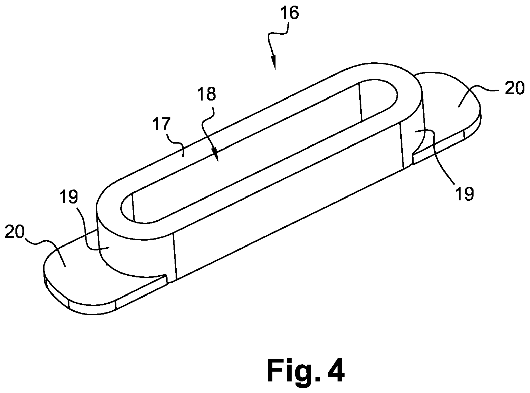

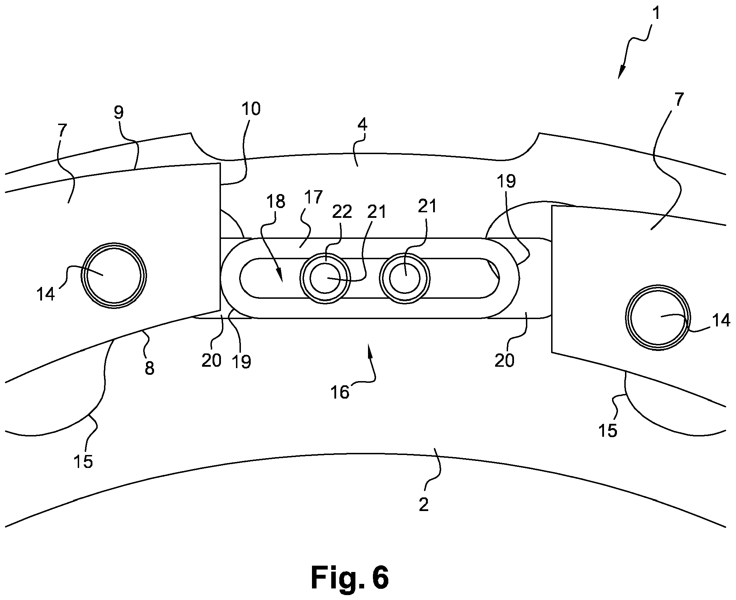

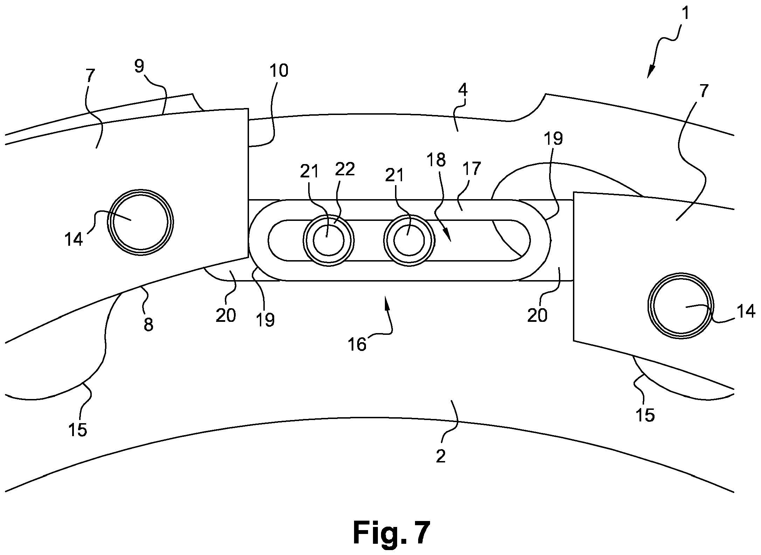

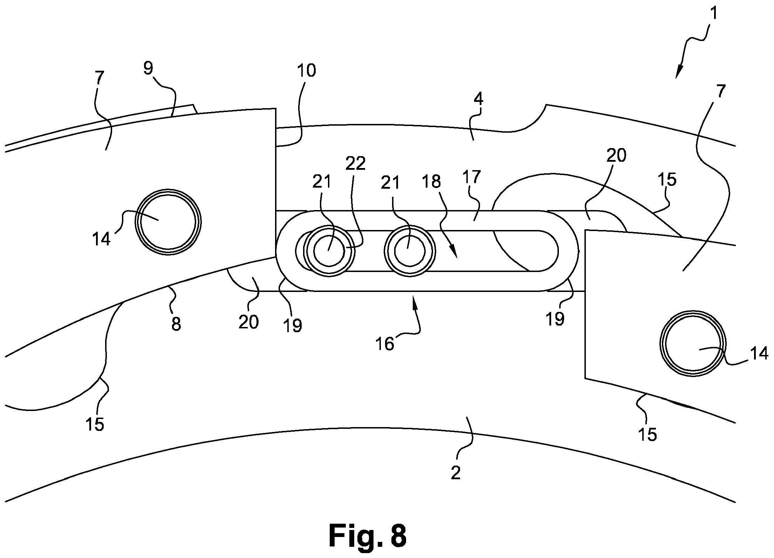

Un dispositif d'amortissement pendulaire 1 selon une première forme de réalisation de l'invention est représenté aux figures 1 à 8. Ce dispositif est destiné à équiper une transmission de véhicule automobile et comporte un support annulaire 2 comprenant une partie annulaire interne 3 et une partie annulaire externe 4, reliées par trois pattes 5 s'étendant radialement. Le support 2 est destiné à être entraîné en rotation autour de son axe A. Le support 2 forme par exemple un voile annulaire pour un amortisseur de torsion ou pour un double volant amortisseur (D.V.A.).

Des masses pendulaires 6, par exemple au nombre de quatre, sont montées sur la partie externe 4 du support 2 et sont agencées régulièrement sur toute la circonférence du support 2.

Chaque masse pendulaire 6 comporte deux parties 7 en forme générale d'arc montées de part et d'autre de la partie externe 4 du support 2. Chaque partie 7 comporte un bord radialement interne 8 et un bord radialement externe 9 reliés par des bords d'extrémités radiaux 10. Chaque partie 7 comporte en outre deux trous 11 en forme d'arc, dont les concavités sont tournées radialement vers l'extérieur.

Les masses 6 sont montées sur la partie radialement externe 4 du support 2, par l'intermédiaire de rouleaux de guidage 12 engagés dans les trous 11 des parties et dans des trous en forme d'arc 13 du support 2, dont les concavités sont tournées radialement vers l'intérieur.

Le mouvement des masses 6 obtenu est du type pendulaire et est fonction de la forme des trous 11, 13 précités.

Les deux parties 7 des masses 6 sont reliées fixement l'une à l'autre par l'intermédiaire d'entretoises 14, traversant des ouvertures 15 en forme d'arc de la partie externe 4 du support 2. Pour chaque masse 6, les entretoises 14 sont par exemple au nombre de trois et sont disposées respectivement au niveau des deux extrémités et de la zone médiane desdites parties 7.

Des organes de synchronisation 16 sont montés de part et d'autre de la partie externe 4 du support 2, entre les bords d'extrémité 10 des parties 7 des masses adjacentes 6.

Chaque organe de synchronisation 16 comporte un corps 17 de forme oblongue et rectiligne, dans lequel est ménagé un trou oblong traversant 18, s'étendant de façon rectiligne le long de l'axe du corps 17. Les extrémités du corps sont formées par des parois hémicylindriques 19, à partir desquelles s'étendent des languettes 20 de plus faible épaisseur que le corps 17. On définit ici l'épaisseur comme étant la dimension axiale du corps 17. Les languettes 20 s'étendent selon l'axe du corps 17, axialement entre les parties correspondantes 7 des masses 6 et la partie radialement externe 4 du support 2, de manière à ménager un écartement compris par exemple entre 0,3 et 0,6 mm et éviter le frottement des masses 6 sur le support 2.

Dans la forme de réalisation illustrée aux figures 1 à 8, le dispositif d'amortissement pendulaire 1 comporte quatre paires de goupilles 21 ou douilles montées fixement, par exemple par emmanchement à force à l'aide d'une presse, dans des trous de la partie radialement externe 4 du support 2. Les goupilles 21 s'étendent axialement de part et d'autre de ladite partie externe 4 et traversent les trous oblongs 18 des organes de synchronisation correspondants 16. Les extrémités 22 des goupilles 21 sont évasées de manière à former des collerettes s'étendant radialement vers l'extérieur. Les goupilles 21 ont une forme sensiblement cylindrique, de diamètre sensiblement égal (à un jeu de fonctionnement près) à la largeur des trous oblongs 18 des organes de synchronisation 16.

De cette manière, chaque organe de synchronisation 16 est déplaçable en translation le long de l'axe passant par le centre des deux goupilles 21 d'une même paire, confondu avec l'axe de l'organe de synchronisation 16.

En fonctionnement, les bords d'extrémité radiaux 10 des masses 6 peuvent venir en appui sur les surfaces hémicylindriques 19 des organes de synchronisation correspondants 16.

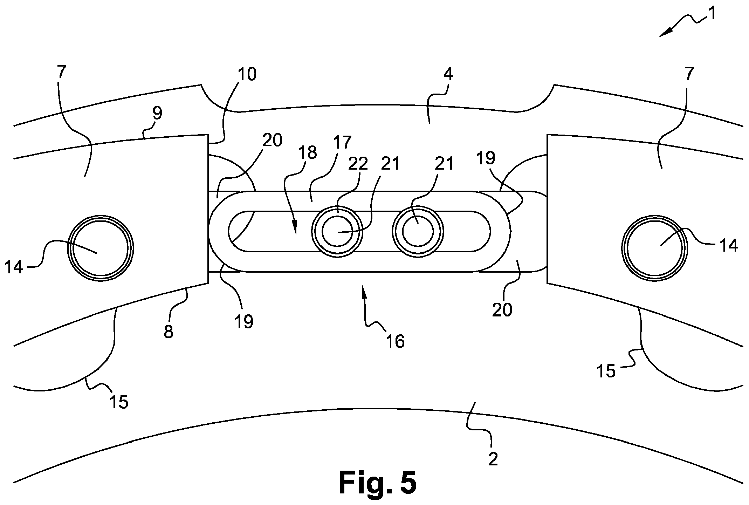

Comme cela est mieux visible aux figures 5 à 8, en fonctionnement, les zones de contact (contacts linéiques) entre les bords d'extrémité radiaux 10 des parties 7 des masses pendulaires 6 et les organes de synchronisation 16 se déplacent dans le temps, en fonction des positions des masses pendulaires 6 et des organes de synchronisation 16 par rapport au support 2.

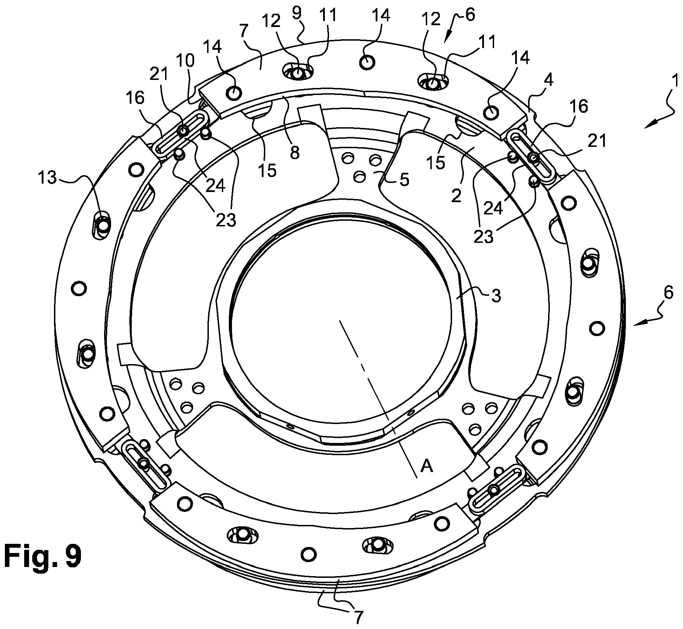

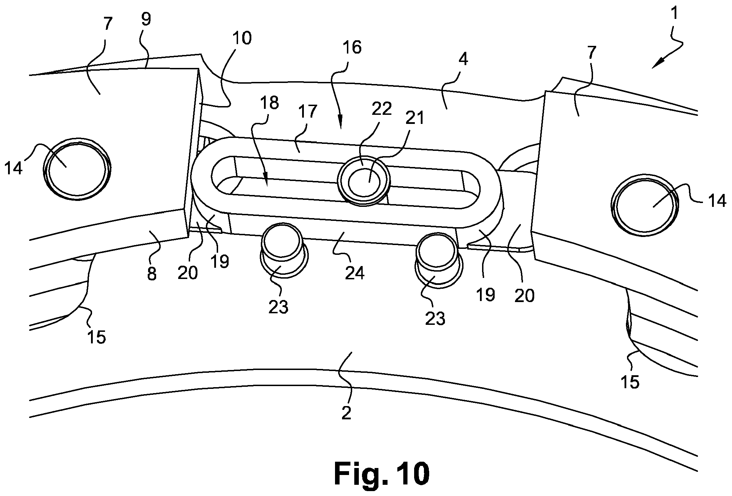

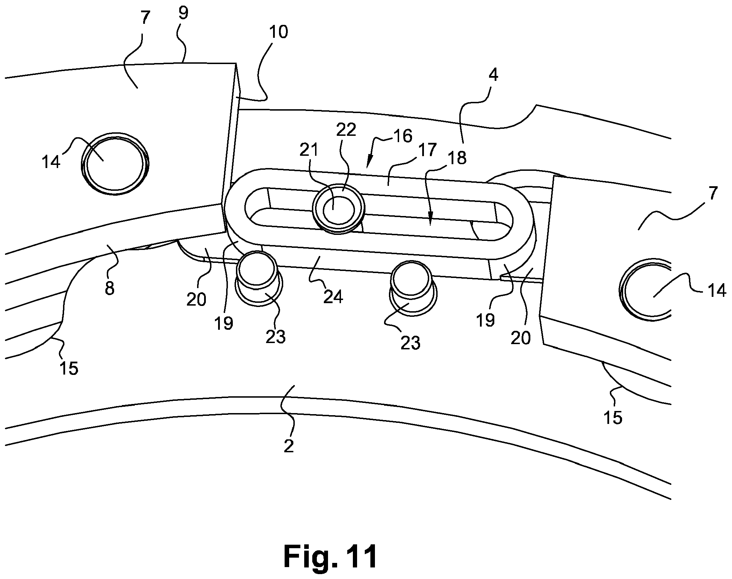

Les figures 9 à 11 représentent un dispositif d'amortissement pendulaire 1 selon une deuxième forme de réalisation de l'invention.

Dans cette forme de réalisation, chaque organe de synchronisation 16 est guidé en translation par l'intermédiaire d'un premier plot formé par une goupille 21 ou d'une douille, de structure similaire à celles décrites précédemment, insérée dans le trou oblong rectiligne 18 de l'organe de synchronisation 16, et deux plots cylindriques 23, décalés circonférentiellement l'un de l'autre et décalés circonférentiellement par rapport à la goupille correspondante 21, destinés à venir en appui contre la face plane et radialement interne 24 de l'organe de synchronisation 16. Dans le cas représenté aux figures 9 à 11, les plots 23 viennent de matière avec la partie externe 4 du support ou sont formés par des axes ou des goupilles traversant la partie externe 4 du support 2 de façon à s'étendre axialement de part et d'autre de ladite partie externe 4.

Ainsi, en fonctionnement, chaque organe de synchronisation 16 est animé d'un mouvement de translation par rapport au support 2.

Comme précédemment, les bords radiaux d'extrémité 10 des masses 6 sont destinés à venir en appui sur les surfaces hémicylindriques 19 des organes de synchronisation 16, les zones d'appui correspondantes variant dans le temps, en fonction des positions respectives des masses pendulaires 6 et des organes de synchronisation 16 par rapport au support 2.

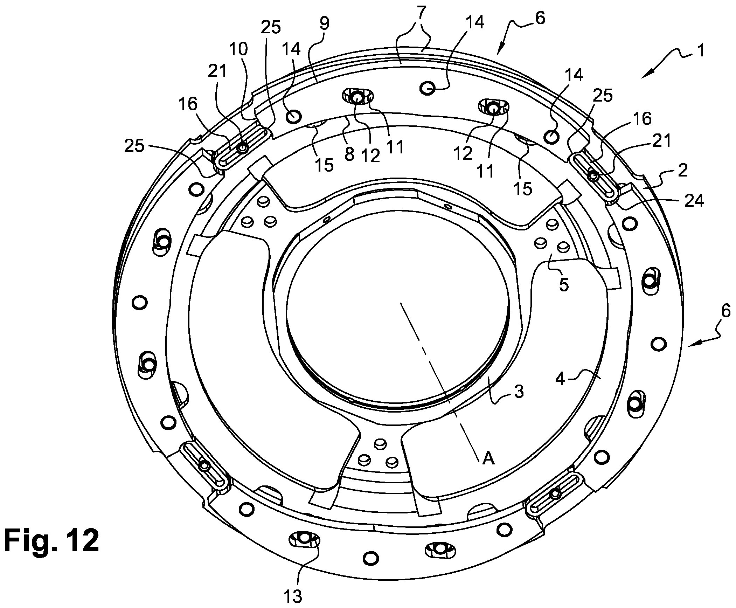

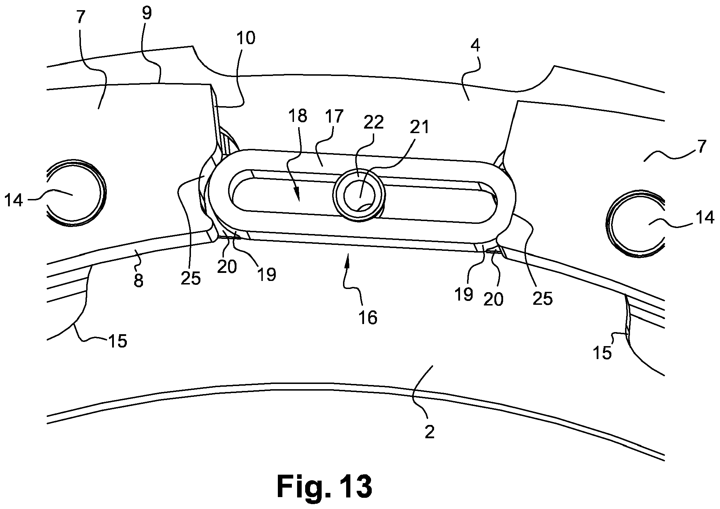

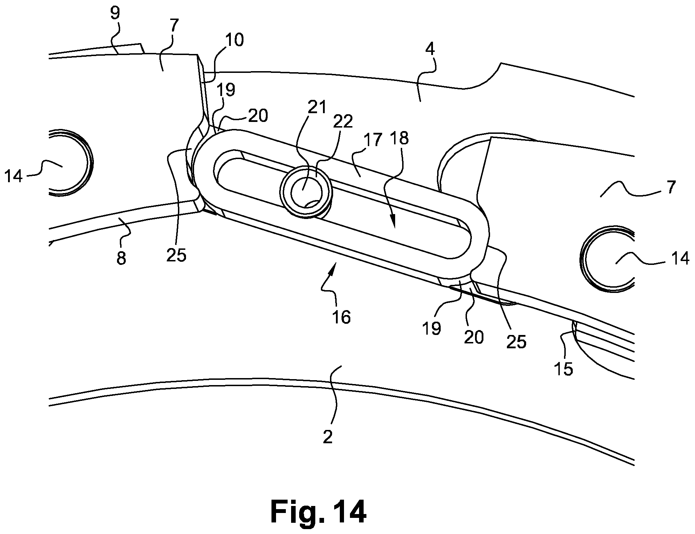

Les figures 12 à 14 représentent un dispositif d'amortissement pendulaire 1 selon une troisième forme de réalisation de l'invention. Dans cette forme de réalisation, des goupilles 21 ou douilles sont montées fixement dans des trous de la partie externe 4 du support 2, ces goupilles 21 présentant la même structure que celle décrite précédemment. Une seule goupille 21 est insérée dans chaque trou rectiligne 18 des organes de synchronisation 16.

En outre, les bords d'extrémité 19 des parties 7 des masses pendulaires 6 comportent des zones en creux 25, de forme arrondie, définissant des surfaces concaves aptes à venir en appui sur les surfaces d'extrémité hémicylindriques 19 de l'organe de synchronisation 16.

Ainsi, en fonctionnement, chaque organe de synchronisation 16 est animé d'un mouvement combinant à la fois un mouvement de rotation autour de la goupille correspondante 21 et un mouvement de translation selon l'axe du trou rectiligne correspondant 18. Les zones en creux 25 sont dimensionnées de façon à éviter le retrait des extrémités hémicylindriques 19 des organes de synchronisation 16 hors desdites zones de creux 25, en fonctionnement.

Le dispositif d'amortissement pendulaire 1 selon l'invention propose donc des moyens de synchronisation de structure simple, ne nécessitant pas de larges ouvertures dans le support 2, de façon à ne pas le fragiliser. Les frottements en jeu sont également limités, ce qui permet d'améliorer l'efficacité du dispositif d'amortissement pendulaire 1.

## Revendications

1. Dispositif d'amortissement pendulaire (1) comportant au moins deux masses pendulaires (6) adjacentes montées de façon mobile sur un support (2) destiné à être entraîné en rotation autour d'un axe (A), un organe de synchronisation (16) étant monté entre les deux masses pendulaires (6) adjacentes, **caractérisé en ce qu'**il comporte au moins un plot (21, 23) fixe par rapport au support (2), engagé dans un trou oblong rectiligne (18) de l'organe de synchronisation (16), les masses pendulaires (6) étant aptes à venir en appui de part et d'autre de l'organe de synchronisation (16) en fonctionnement.

2. Dispositif d'amortissement pendulaire (1) selon la revendication 1, **caractérisé en ce qu'**il comporte au moins deux plots (21) fixes par rapport au support (2), engagés dans le trou oblong (18) de l'organe de synchronisation (16) de façon à ce que ledit organe de synchronisation (16) soit animé d'un mouvement de translation par rapport au support (2) en fonctionnement.

3. Dispositif d'amortissement pendulaire (1) selon la revendication 1, **caractérisé en ce qu'**il comporte au moins trois plots (21, 23) fixes par rapport au support (2), un plot (21) étant engagé dans le trou oblong (18) de l'organe de synchronisation (16), deux autres plots (23) étant aptes à coulisser le long d'au moins une surface plane (24) dudit organe de synchronisation (16), de façon à ce que ledit organe de synchronisation (16) soit animé d'un mouvement de translation par rapport au support (2) en fonctionnement.

4. Dispositif d'amortissement pendulaire (1) selon la revendication 1, **caractérisé en ce qu'**il comporte un seul plot (21) fixe par au support (2) et engagé dans le trou oblong (18) de chaque organe de synchronisation (16), les extrémités (10) des masses pendulaires (6) en appui sur l'organe de synchronisation (16) comportant des surfaces aptes à pivoter par rapport aux zones d'appui desdites extrémités (10) des masses (6) sur l'organe de synchronisation (16).

5. Dispositif d'amortissement pendulaire (1) selon l'une des revendications 1 à 4, **caractérisé en ce que** l'organe de synchronisation (16) a une forme oblongue s'étendant suivant un axe, le trou oblong (18) s'étendant suivant l'axe de l'organe de synchronisation (16), les extrémités de l'organe de synchronisation comportant des surfaces d'extrémité arrondies (19) destinées à l'appui des extrémités correspondantes (10) des masses pendulaires (6).

6. Dispositif d'amortissement pendulaire (1) selon les revendications 4 et 5, **caractérisé en ce que** les extrémités (10) des masses pendulaires (6) comportent des zones en creux (25), de forme arrondie, en appui sur les surfaces d'extrémité arrondies (19) de l'organe de synchronisation (16).

7. Dispositif d'amortissement pendulaire (1) selon l'une des revendications 1 à 6, **caractérisé en ce que** l'organe de synchronisation (16) comporte des moyens d'écartement (20) intercalés axialement entre le support (2) et l'une au moins des masses pendulaires adjacentes (6).

8. Dispositif d'amortissement pendulaire (1) selon la revendication 7, **caractérisé en ce que** les moyens d'écartement comportent au moins une languette (20) s'étendant entre la masse pendulaire correspondante (6) et le support (2).

9. Dispositif d'amortissement pendulaire (1) selon l'une des revendications 1 à 8, **caractérisé en ce que** chaque plot engagé dans le trou oblong (18) de l'organe de synchronisation (16) est formé par une goupille (21) ou par une bague engagée fixement dans un trou du support (2).

10. Dispositif d'amortissement pendulaire (1) selon l'une des revendications 1 à 8, **caractérisé en ce que** chaque plot (21) engagé dans le trou oblong (18) de l'organe de synchronisation (16) est cylindrique et a un diamètre sensiblement égal à la largeur dudit trou oblong (18).

## Patentansprüche

1. Pendeldämpfungsvorrichtung (1), welche wenigstens zwei benachbarte Pendelmassen (6) aufweist, die beweglich auf einem Träger (2) angebracht sind, der dazu bestimmt ist, um eine Achse (A) drehend angetrieben zu werden, wobei ein Synchronisationsorgan (16) zwischen den zwei benachbarten Pendelmassen (6) angebracht ist, **dadurch gekennzeichnet, dass** sie wenigstens ein bezüglich des Trägers (2) feststehendes Kontaktstück (21, 23) aufweist, das in ein geradliniges Langloch (18) des Synchronisationsorgans (16) eingeführt ist, wobei die Pendelmassen (6) geeignet sind, im Betrieb beiderseits des Synchronisationsorgans (16) zur Anlage zu kommen.

2. Pendeldämpfungsvorrichtung (1) nach Anspruch 1, **dadurch gekennzeichnet, dass** sie wenigstens zwei bezüglich des Trägers (2) feststehende Kontaktstücke (21) aufweist, die in das Langloch (18) des Synchronisationsorgans (16) eingeführt sind, derart, dass das Synchronisationsorgan (16) im Betrieb in eine Translationsbewegung bezüglich des Trägers (2) versetzt wird.

3. Pendeldämpfungsvorrichtung (1) nach Anspruch 1, **dadurch gekennzeichnet, dass** sie wenigstens drei bezüglich des Trägers (2) feststehende Kontaktstücke (21, 23) aufweist, wobei ein Kontaktstück (21) in das Langloch (18) des Synchronisationsorgans (16) eingeführt ist, wobei zwei weitere Kontaktstücke (23) geeignet sind, entlang wenigstens einer ebenen Fläche (24) des Synchronisationsorgans (16) zu gleiten, derart, dass das Synchronisationsorgan (16) im Betrieb in eine Translationsbewegung bezüglich des Trägers (2) versetzt wird.

4. Pendeldämpfungsvorrichtung (1) nach Anspruch 1, **dadurch gekennzeichnet, dass** sie ein einziges Kontaktstück (21) aufweist, das des Trägers (2) feststehend ist und in das Langloch (18) jedes Synchronisationsorgans (16) eingeführt ist, wobei die Enden (10) der Pendelmassen (6), die an dem Synchronisationsorgan (16) anliegen, Flächen aufweisen, die geeignet sind, bezüglich der Anlagebereiche der Enden (10) der Massen (6) an dem Synchronisationsorgan (16) zu schwenken.

5. Pendeldämpfungsvorrichtung (1) nach einem der Ansprüche 1 bis 4, **dadurch gekennzeichnet, dass** das Synchronisationsorgan (16) eine längliche Form aufweist, die sich entlang einer Achse erstreckt, wobei sich das Langloch (18) entlang der Achse des Synchronisationsorgans (16) erstreckt, wobei die Enden des Synchronisationsorgans gerundete Endflächen (19) aufweisen, die zur Anlage der entsprechenden Enden (10) der Pendelmassen (6) bestimmt sind.

6. Pendeldämpfungsvorrichtung (1) nach den Ansprüchen 4 und 5, **dadurch gekennzeichnet, dass** die Enden (10) der Pendelmassen (6) vertiefte Bereiche (25) mit gerundeter Form aufweisen, die an den gerundeten Endflächen (19) des Synchronisationsorgans (16) anliegen.

7. Pendeldämpfungsvorrichtung (1) nach einem der Ansprüche 1 bis 6, **dadurch gekennzeichnet, dass** das Synchronisationsorgan (16) Abstandsmittel (20) aufweist, die axial zwischen dem Träger (2) und wenigstens einer der benachbarten Pendelmassen (6) angeordnet sind.

8. Pendeldämpfungsvorrichtung (1) nach Anspruch 7, **dadurch gekennzeichnet, dass** die Abstandsmittel wenigstens eine Lasche (20) aufweisen, die sich zwischen der entsprechenden Pendelmasse (6) und dem Träger (2) erstreckt.

9. Pendeldämpfungsvorrichtung (1) nach einem der Ansprüche 1 bis 8, **dadurch gekennzeichnet, dass** jedes Kontaktstück, das in das Langloch (18) des Synchronisationsorgans (16) eingeführt ist, von einem Stift (21) oder einer Hülse gebildet wird, der bzw. die fest in ein Loch des Trägers (2) eingefügt ist.

10. Pendeldämpfungsvorrichtung (1) nach einem der Ansprüche 1 bis 8, **dadurch gekennzeichnet, dass** jedes Kontaktstück (21), das in das Langloch (18) des Synchronisationsorgans (16) eingeführt ist, zylindrisch ist und einen Durchmesser hat, der im Wesentlichen gleich der Breite des Langlochs (18) ist.

## Claims

1. Pendular damping device (1) comprising at least two adjacent pendular weights (6) movably mounted on a support (2) intended to be driven in rotation about an axis (A), a synchronization member (16) being mounted between the two adjacent pendular weights (6), **characterized in that** it comprises at least one stud (21, 23) fixed in relation to the support (2), engaged in a rectilinear oblong hole (18) of the synchronization member (16), the pendular weights (6) being capable of coming to bear on either side of the synchronization member (16) in operation.

2. Pendular damping device (1) according to Claim 1, **characterized in that** it comprises at least two studs (21) fixed in relation to the support (2), engaged in the oblong hole (18) of the synchronization member (16) so that said synchronization member (16) is driven by a translational movement in relation to the support (2) in operation.

3. Pendular damping device (1) according to Claim 1, **characterized in that** it comprises at least three studs (21, 23) fixed in relation to the support (2), one stud (21) being engaged in the oblong hole (18) of the synchronization member (16), two other studs (23) being capable of sliding along at least one planar surface (24) of said synchronization member (16), so that said synchronization member (16) is driven by a translational movement in relation to the support (2) in operation.

4. Pendular damping device (1) according to Claim 1, **characterized in that** it comprises a single stud (21) fixed in to the support (2) and engaged in the oblong hole (18) of each synchronization member (16), the ends (10) of the pendular weights (6) bearing on the synchronization member (16) comprising surfaces capable of pivoting in relation to the zones of bearing of said ends (10) of the weights (6) on the synchronization member (16).

5. Pendular damping device (1) according to one of Claims 1 to 4, **characterized in that** the synchronization member (16) has an oblong form extending on an axis, the oblong hole (18) extending on the axis of the synchronization member (16), the ends of the synchronization member comprising rounded end surfaces (19) intended to bear the corresponding ends (10) of the pendular weights (6).

6. Pendular damping device (1) according to Claims 4 and 5, **characterized in that** the ends (10) of the pendular weights (6) comprise recessed zones (25), of rounded form, bearing on the rounded end surfaces (19) of the synchronization member (16).

7. Pendular damping device (1) according to one of Claims 1 to 6, **characterized in that** the synchronization member (16) comprises separating means (20) inserted axially between the support (2) and at least one of the adjacent pendular weights (6).

8. Pendular damping device (1) according to Claim 7, **characterized in that** the separating means comprise at least one tongue (20) extending between the corresponding pendular weight (6) and the support (2).

9. Pendular damping device (1) according to one of Claims 1 to 8, **characterized in that** each stud (21) engaged in the oblong hole (18) of the synchronization member (16) is formed by a pin (21) or by a ring fixedly engaged in a hole of the support (2).

10. Pendular damping device (1) according to one of Claims 1 to 8, **characterized in that** each stud (21) engaged in the oblong hole (18) of the synchronization member (16) is cylindrical and has a diameter substantially equal to the width of said oblong hole (18) .
